# EUROPÄISCHE PATENTANMELDUNG

(11) **EP 4 763 590 A1**
(43) Veröffentlichungstag der Anmeldung: **24.06.2026**
(21) Anmeldenummer: 25221630.4
(22) Anmeldetag: 09.12.2025
(51) Int. Cl.: B60L 53/14

(54) **VORRICHTUNG UND ANORDNUNG FÜR DAS BIDIREKTIONALE LADEN**

(30) Priorität: 19.12.2024 DE 102024139127
(71) Anmelder: Volkswagen Aktiengesellschaft, 38440 Wolfsburg (DE)
(72) Erfinder: Schwarze, Henrik, 38440 Wolfsburg (DE); Stichowski, Torsten, 38440 Wolfsburg (DE); Thiel, Werner Uwe, 38440 Wolfsburg (DE)

(57) **Zusammenfassung**

Die Erfindung betrifft eine Vorrichtung (100) für das bidirektionale Laden, umfassend:
- mindestens eine Kommunikationseinrichtung (10) zur Kommunikation zwischen mindestens einem Fahrzeug (200) und mindestens einer stationären Anlage (300), wobei das mindestens eine Fahrzeug (200) gemäß eines ersten Protokolls kommuniziert und die mindestens eine stationäre Anlage (300) gemäß eines weiteren Protokolls kommuniziert,
wobei die Vorrichtung (100) dazu ausgebildet ist, mindestens einen Parameter von dem mindestens einen Fahrzeug (200) an die mindestens eine stationäre Anlage (300) zu übertragen, indem die mindestens eine Kommunikationseinrichtung (10) den mindestens einen Parameter von dem ersten Protokoll in das weitere Protokoll übersetzt, wobei der mindestens eine Parameter das bidirektionale Laden parametrisiert,
sowie eine Anlage (400) für das bidirektionale Laden.

## Beschreibung

Die Erfindung betrifft eine Vorrichtung und eine Anordnung für das bidirektionale Laden.

Moderne Fahrzeuge, wie z.B. batteriebetriebene Elektrofahrzeuge, verfügen häufig über eine bidirektionale Ladefunktion, um eine im Fahrzeug verbaute Batterie als Pufferspeicher für überschüssigen Strom verwenden zu können. Allerdings sind stromerzeugende stationäre Anlagen, wie z.B. private Photovoltaikanlagen, häufig für einen Einsatz mit einem stationären Energiespeicher ausgelegt, um überschüssigen Strom zwischenspeichern zu können. Eine Nutzung eines Fahrzeugs mit bidirektionaler Ladefunktion als Energiespeicher ist in der Regel in diesen stationären Anlagen nicht vorgesehen. Dies führt dazu, dass ein Einsatzbereich moderner Fahrzeuge mit einer bidirektionalen Ladefunktion eingeschränkt ist.

Es stellt sich das technische Problem, eine Vorrichtung und eine Anlage für das bidirektionale Laden zu schaffen, welche einen Einsatzbereich von Fahrzeugen mit bidirektionaler Ladenfunktion erweitern.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird eine Vorrichtung für das bidirektionale Laden, umfassend:
- mindestens eine Kommunikationseinrichtung zur Kommunikation zwischen mindestens einem Fahrzeug und mindestens einer stationären Anlage, wobei das mindestens eine Fahrzeug gemäß eines ersten Protokolls kommuniziert und die mindestens eine stationäre Anlage gemäß eines weiteren Protokolls kommuniziert,
wobei die Vorrichtung dazu ausgebildet ist, mindestens einen Parameter von dem mindestens einen Fahrzeug an die mindestens eine stationäre Anlage zu übertragen, indem die mindestens eine Kommunikationseinrichtung den mindestens einen Parameter von dem ersten Protokoll in das weitere Protokoll übersetzt, wobei der mindestens eine Parameter das bidirektionale Laden parametrisiert.

Die Vorrichtung hat zum Vorteil, dass das Fahrzeug z.B. als Pufferspeicher genutzt werden kann, obwohl die stationäre Anlage eigentlich nur für die Nutzung mit einem stationären Energiespeicher ausgelegt ist, der z.B. das weitere Protokoll spricht. Hierdurch wird der Einsatzbereich von Fahrzeugen mit bidirektionaler Ladenfunktion erweitert. Dies wird technisch bewirkt, indem der fahrzeugseitig kommunizierte Parameter in das von der stationären Anlage genutzte Protokoll übersetzt wird. Mit anderen Worten: Durch das Übersetzen des Parameters kann das Fahrzeug der stationären Anlage eine Randbedingung für das bidirektionale Laden mitteilen, ohne dass die stationäre Anlage für eine Kommunikation mit dem Fahrzeug ausgelegt sein muss.

Weiter vorgeschlagen wird eine Anordnung für das bidirektionale Laden, umfassend:
- mindestens eine Vorrichtung nach einer in dieser Offenbarung beschriebenen Ausführungsform,
- mindestens ein Fahrzeug,
- mindestens eine stationäre Anlage, wobei die mindestens eine stationäre Anlage an mindestens eine regenerative Energiequelle und/oder mindestens einen Verbraucher angeschlossen ist,
wobei die Anordnung dazu ausgebildet ist, dass Strom für das Laden des mindestens einen Fahrzeugs aus der mindestens einen regenerativen Energiequelle bereitgestellt wird und/oder Strom für das Betreiben des mindestens einen Verbrauchers aus dem mindestens einen Fahrzeug bereitgestellt wird. Die regenerative Energiequelle kann z.B. Energie mittels Photovoltaik gewinnen. Der Verbraucher kann z.B. ein elektrisch betriebenes Haushaltsgerät sein. Möglich ist auch, dass die Anordnung dazu ausgebildet ist, Strom aus dem mindestens einen Fahrzeug in ein Stromnetz einzuspeisen oder Strom aus dem Stromnetz in dem Fahrzeug zu speichern. Die Anordnung, insbesondere die stationäre Anlage, kann hierzu an das Stromnetz angeschlossen sein. Die im Rahmen dieser Offenbarung für die Vorrichtung erläuterten technischen Effekte und Vorteile treffen selbstverständlich auch für die Anordnung zu und umgekehrt.

Das Fahrzeug kann ein Elektrofahrzeug sein. Das Fahrzeug kann z.B. ein PKW, LKW, Schienenfahrzeug, Wasserfahrzeug oder Luftfahrzeug sein. Das Fahrzeug weist insbesondere eine bidirektionale Ladefunktion auf. Das Fahrzeug kann z.B. eine Hochvoltbatterie umfassen.

Die Hochvoltbatterie des Fahrzeugs kann insbesondere als Pufferspeicher durch die stationäre Anlage genutzt werden.

Der Parameter kann das bidirektionale Laden parametrisieren, indem der Parameter z.B. einen Sollwert für eine Ladespannung und/oder Entladespannung umfasst, die an der stationären Anlage bereitgestellt werden soll, um bidirektional zu laden.

Die stationäre Anlage kann einen Stromwandler umfassen, insbesondere mit Wechselrichterfunktion und/oder Gleichrichterfunktion. Die Anlage kann z.B. Strom für das bidirektionale Laden auf einem entsprechenden Spannungsniveau bereitstellen.

Das erste Protokoll kann ein Kommunikationsprotokoll wie z.B. ISO 15118-2, ISO 15118-20, CHADEMO, GBT oder ChaoJi sein. Das weitere Protokoll kann ein Kommunikationsprotokoll wie z.B. Modbus sein. Die Kommunikation gemäß des ersten Protokolls kann insbesondere inkompatibel zu der Kommunikation gemäß des weiteren Protokolls sein. Die Kommunikation in dem jeweiligen Protokoll kann in Nachrichten erfolgen. Nachrichten gemäß des ersten Protokolls können z.B. im JSON- oder XML-Format kodiert sein. Nachrichten gemäß des weiteren Protokolls können z.B. in einem Telegrammformat kodiert sein. Der Parameter kann als ein Attribut in ein protokollspezifisches Element einer Nachricht gemäß des jeweiligen Protokolls geschrieben sein. Insbesondere unterscheiden sich die Nachrichten in ihrem Aufbau. Nachrichten gemäß des ersten Protokolls können z.B. einen sogenannten Plug-and-Charge-Aufbau aufweisen. Nachrichten gemäß des weiteren Protokolls können z.B. einen sogenannten frame-, register- und/oder coilbasierten Aufbau aufweisen.

Die Kommunikationseinrichtung kann z.B. einen Mikrocontroller umfassen oder als solcher ausgebildet sein. Um die Kommunikation zwischen der Vorrichtung und dem Fahrzeug zu ermöglichen, kann mindestens eine erste Schnittstelle der Kommunikationseinrichtung mit einer Ladebuchse des Fahrzeugs, z.B. gemäß IEC Typ 2, verbunden sein. Ferner kann die mindestens eine weitere Schnittstelle der Kommunikationseinrichtung mit einem Kommunikationsanschluss, z.B. einem Busanschluss, der stationären Anlage verbunden sein, um eine Kommunikation zwischen Vorrichtung und stationärer Anlage zu ermöglichen. Die Kommunikationseinrichtung kann dazu ausgebildet sein, Nachrichten gemäß des jeweiligen Protokolls zu empfangen und zu senden. Insbesondere kann die Kommunikationseinrichtung Nachrichten gemäß des ersten Protokolls von dem Fahrzeug empfangen und Nachrichten gemäß des weiteren Protokolls an die stationäre Anlage senden und/oder umgekehrt.

Das Übersetzen des Parameters von dem ersten Protokoll in das weitere Protokoll kann z.B. mittels einer Zuordnungsvorschrift erfolgen. Die Zuordnungsvorschrift kann vorbekannt sein. Beispielsweise kann ein erstes Element in einer Nachricht gemäß des ersten Protokolls einem weiteren Element in einer Nachricht gemäß des weiteren Protokolls zugeordnet sein. Der Parameter kann übersetzt werden, indem der Parameter aus dem ersten Element der Nachricht gemäß des ersten Protokolls ausgelesen wird und in das weitere Element der Nachricht gemäß des weiteren Protokolls geschrieben wird.

Die Vorrichtung ist insbesondere dazu ausgebildet, Strom zwischen dem mindestens einen Fahrzeug und der mindestens einen stationären Anlage zu übertragen, um das bidirektionale Laden zu ermöglichen.

In einer Ausführungsform ist die Vorrichtung dazu ausgebildet, Strom zwischen dem mindestens einen Fahrzeug und der mindestens einen stationären Anlage wandlungsfrei zu übertragen. Auf diese Weise muss die Vorrichtung den Strom zum Übertragen nicht wandeln, was elektrische Verluste reduziert und einen vorrichtungsinternen Stromwandler unnötig macht. Denn die stationäre Anlage kann ein Stromwandler sein oder einen solchen umfassen. Die Vorrichtung kann z.B. an einen Stromanschluss des mindestens einen Fahrzeugs und/oder einen Stromanschluss der mindestens einen stationären Anlage angeschlossen sein. Der übertragene Strom kann insbesondere Gleichstrom sein.

In einer Ausführungsform ist die Vorrichtung dazu ausgebildet, den mindestens einen Parameter mittels der mindestens einen Kommunikationseinrichtung aus einer Nachricht gemäß des ersten Protokolls auszulesen und in eine Nachricht gemäß des weiteren Protokolls zu schreiben. Auf diese Weise kann das Übersetzen des Parameters durch einen Lese- und einen Schreibvorgang realisiert werden. Beispielsweise kann der Parameter aus einem protokollspezifischen Element einer Nachricht gemäß des ersten Protokolls ausgelesen werden und in ein protokollspezifisches Element einer Nachricht gemäß des weiteren Protokolls geschrieben werden. Die Kommunikationseinrichtung kann zu diesem Zweck zumindest Leserechte für Nachrichten gemäß des ersten Protokolls und zumindest Schreibrechte für Nachrichten gemäß des weiteren Protokolls aufweisen.

In einer Ausführungsform umfasst die Vorrichtung mindestens eine Schalteinrichtung zum Herstellen einer Stromverbindung zwischen dem mindestens einen Fahrzeug und der mindestens einen stationären Anlage, wobei die Vorrichtung dazu ausgebildet ist, dass die Stromverbindung erst dann mittels der mindestens einen Schalteinrichtung hergestellt wird, wenn mindestens ein Istwert um nicht mehr als eine vorbekannte Differenz von mindestens einem Sollwert abweicht, wobei der mindestens eine Sollwert über das erste Protokoll kommuniziert wird und der mindestens eine Istwert über das weitere Protokoll kommuniziert wird. Auf diese Weise kann sichergestellt werden, dass z.B. ein Spannungsniveau zwischen dem Fahrzeug und der stationären Anlage angeglichen ist, bevor eine elektrische Verbindung zwischen dem Fahrzeug und der stationären Anlage hergestellt wird. Denn durch ein Angleichen der Spannungen wird beispielsweise vermieden, dass es beim Herstellen einer elektrischen Verbindung zwischen dem Fahrzeug und der stationären Anlage zu einem elektrischen Durchschlag aufgrund einer Spannungsdifferenz kommt. Die Schalteinrichtung kann z.B. ein Schütz oder Relais sein. Die Kommunikationseinrichtung und/oder die Schalteinrichtung kann dazu ausgebildet sein, eine Abweichung zwischen dem Istwert und dem Sollwert zu bestimmen - hierzu kann die Schalteinrichtung z.B. einen Mikrokontroller aufweisen. Alternativ oder kumulativ kann die Schalteinrichtung durch die Kommunikationseinrichtung gesteuert werden. Ein Schaltvorgang zum Herstellen der Stromverbindung kann ausgelöst werden, wenn die bestimmte Abweichung geringer als die vorbekannte Differenz ist. Der Sollwert kann z.B. ein Wert der Spannung sein, der durch die stationäre Anlage bereitgestellt werden soll. Der übertragene Parameter kann z.B. der Sollwert sein oder diesen umfassen. Der Istwert kann z.B. ein Wert der Spannung sein, der durch die stationäre Anlage aktuell bereitgestellt wird. Der Istwert kann z.B. in einer Nachricht gemäß des weiteren Protokolls von der stationären Anlage an die Vorrichtung kommuniziert werden. Beispielsweise ist der Istwert als ein Attribut in ein Element in der Nachricht gemäß des weiteren Protokolls hinterlegt. Nach dem Schaltvorgang kann - abhängig davon, ob das Fahrzeug geladen oder entladen werden soll - ein Spannungsniveau an der stationären Anlage abgesenkt oder angehoben werden, um einen Stromfluss in die entsprechende Stromflussrichtung zu ermöglichen. Selbstverständlich kann die Vorrichtung dazu ausgebildet sein, dass die Stromverbindung mittels der mindestens einen Schalteinrichtung getrennt wird, z.B. wenn der mindestens eine Istwert um mehr als die vorbekannte Differenz von dem mindestens einen Sollwert abweicht.

In einer Ausführungsform umfasst die Vorrichtung ferner mindestens eine Sensoreinrichtung, wobei die mindestens eine Vorrichtung dazu ausgebildet ist, dass mindestens ein Istwert mittels der mindestens einen Sensoreinrichtung erfasst wird, wobei eine Stromverbindung zwischen dem mindestens einen Fahrzeug und der mindestens einen stationären Anlage erst dann mittels mindestens einer Schalteinrichtung hergestellt wird, wenn der erfasste mindestens eine Istwert um nicht mehr als eine vorbekannte Differenz von mindestens einem Sollwert abweicht. Auf diese Weise kann vorrichtungsintern sichergestellt werden, dass z.B. der erfasste Istwert der Spannung, die über die stationäre Anlage bereitgestellt wird, einem Sollwert ausreichend nahe ist - ohne dass die Vorrichtung hierbei auf die Kommunikation des zuvor erläuterten Istwerts über das weitere Protokoll angewiesen ist. Der Sollwert kann z.B. der zuvor erläuterte Sollwert sein. Die Schalteinrichtung wurde ebenfalls zuvor erläutert. Die Sensoreinrichtung kann ein Voltmeter sein. Selbstverständlich kann das Erfassen des Istwerts auch für einen Kontrollabgleich mit dem kommunizierten Istwert genutzt werden, wobei die Stromverbindung nur dann hergestellt wird, wenn der kommunizierte Istwert um nicht mehr als eine vorbekannte Differenz von dem erfassten Istwert abweicht.

In einer Ausführungsform ist die Vorrichtung dazu ausgebildet, mindestens ein Aufwecksignal von der mindestens einen stationären Anlage an das mindestens eine Fahrzeug zu übertragen. Auf diese Weise kann z.B. das Fahrzeug aus einem Stand-By-Modus geweckt werden, um das bidirektionale Laden zu initialisieren. Das Aufwecksignal kann z.B. innerhalb des Fahrzeugs z.B. mit Hilfe eine CAN-Bus weitergeleitet werden, z.B. als ein CAN-Hochpegel oder ein CAN-Niedrigpegel. Selbstverständlich kann die Vorrichtung ferner dazu ausgebildet sein, mindestens einen weiteren Parameter von der mindestens einen stationären Anlage an das mindestens eine Fahrzeug zu übertragen. Insbesondere kann der mindestens eine weitere Parameter von der mindestens einen stationären Anlage an das mindestens eine Fahrzeug übertragen werden, indem die mindestens eine Kommunikationseinrichtung den mindestens einen weiteren Parameter von dem weiteren Protokoll in das erste Protokoll übersetzt. Der weitere Parameter kann insbesondere einen Energiebereitstellungswert für das bidirektionale Laden parametrisieren. Beispielsweise kann der weitere Parameter parametrisieren, wie viel Strom, für wie lange und/oder mit welcher Spannung durch das Fahrzeug bereitgestellt werden soll und/oder dem Fahrzeug durch die stationäre Anlage bereitgestellt werden kann. Das Übersetzen eines Parameters von einem Protokoll in ein anderes Protokoll wurde bereits erläutert, mutatis mutandis.

In einer Ausführungsform erfolgt mindestens eine Spannungsversorgung der Vorrichtung fahrzeugseitig. Auf diese Weise kann die Vorrichtung z.B. auch bei einem Blackout für das bidirektionale Laden eingesetzt werden. Beispielsweise kann das Fahrzeug bei einem netzseitigen Stromausfall zum Anschalten der Vorrichtung genutzt werden, sodass das bidirektionale Laden trotz Stromausfall initialisiert werden kann, um z.B. den zuvor erläuterten Verbraucher mit Strom aus einer Batterie des Fahrzeugs zu versorgen.

In einer Ausführungsform umfasst die Vorrichtung mindestens eine Energiespeichereinrichtung, wobei eine Spannungsversorgung der Vorrichtung mittels der mindestens einen Energiespeichereinrichtung erfolgt. Auf diese Weise ist die Vorrichtung autark. Die Energiespeichereinrichtung kann z.B. eine Lithium-Ionen-Batterie und/oder ein Kondensator, insbesondere ein Super-Cap-Kondensator sein.

In einer Ausführungsform weist mindestens ein übertragener Parameter mindestens einen der folgenden Werte auf:
- ein aktueller, maximaler und/oder minimaler Ladestromwert,
- ein aktueller, maximaler und/oder minimaler Ladespannungswert und/oder
- ein aktueller, maximaler und/oder minimaler Ladeleistungswert.

Auf diese Weise kann das Fahrzeug und/oder die stationäre Anlage vor Beschädigungen in Folge einer Überbeanspruchung geschützt werden. Der übertragene Parameter kann z.B. von dem Fahrzeug an die Vorrichtung oder von der stationären Anlage an die Vorrichtung übertragen werden. Der jeweilige aktuelle Wert kann z.B. ein Istwert der Batterie des Fahrzeugs und/oder ein Istwert der stationären Anlage sein. Der jeweilige minimale und/oder maximale Wert kann z.B. eine Betriebsgrenze der Batterie oder der stationären Anlage sein. Die Vorrichtung kann dazu ausgebildet sein, eine Stromverbindung zu trennen, wenn der jeweilige aktuelle Wert den zugehörigen minimalen und/oder maximalen Wert unter- bzw. überschreitet. Auf diese Weise kann sichergestellt werden, dass z.B. der aktuelle Ladestrom, die aktuelle Ladespannung und/oder die aktuelle Ladeleistung innerhalb eines vorgegeben Betriebsbereichs bleiben - sowohl bei einem Laden des Fahrzeugs als auch bei einem Entladen des Fahrzeugs.

Die Erfindung wird anhand eines Ausführungsbeispiels näher erläutert. Die Figur zeigt:

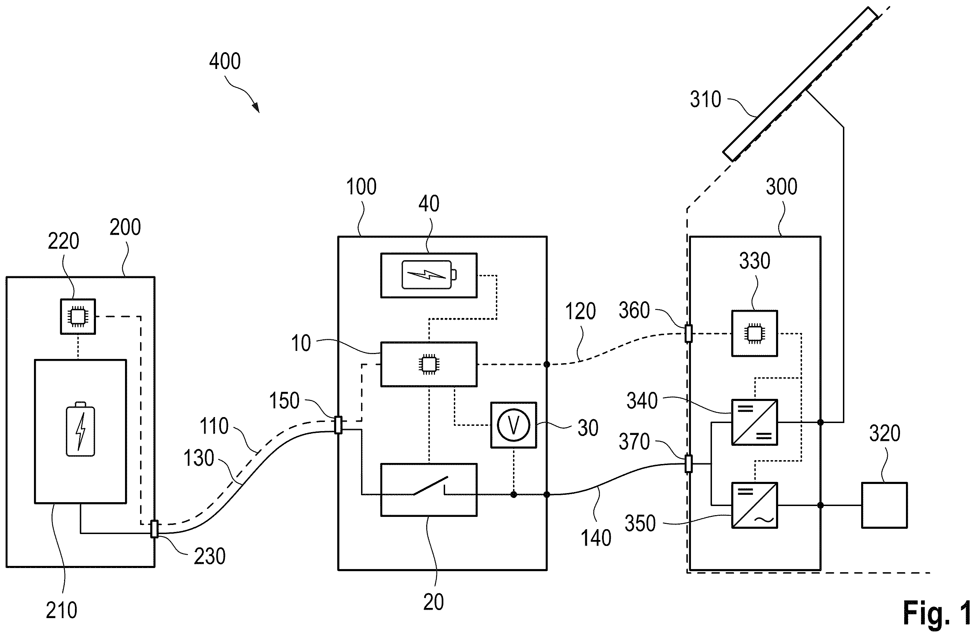

- Fig. 1: eine schematische Darstellung einer Ausführungsform einer Anordnung mit einer Vorrichtung für das bidirektionale Laden.

Fig. 1 zeigt eine schematische Darstellung einer Ausführungsform einer Anordnung 400 mit einer Vorrichtung 100 für das bidirektionale Laden. Die Vorrichtung 100 wird im Folgenden noch näher erläutert.

An die Vorrichtung 100 ist ein als Elektrofahrzeug ausgebildetes Fahrzeug 200 angeschlossen.

Das Fahrzeug 200 weist eine als Lithium-Ionen-Speicher ausgebildete Batterie 210 sowie eine als Mikrocontroller ausgebildete, fahrzeuginterne Steuereinrichtung 220 auf. Die fahrzeuginterne Steuereinrichtung 220 dient unter anderem dazu, einen Parameter für das bidirektionale Laden über eine erste Kommunikationsleitung 110 an die Vorrichtung 100 zu senden.

Der Parameter kann das bidirektionale Laden parametrisieren, indem der Parameter z.B. einen Sollwert für eine Ladespannung und/oder Entladespannung der Batterie 210 vorgibt, die an der stationären Anlage 300 bereitgestellt werden soll, um bidirektional zu laden.

Für das Übertragen des Parameters kann das Fahrzeug 200 mit einem Ladekabel (nicht dargestellt) an die Vorrichtung 100 angeschlossen sein. Das Ladekabel verbindet z.B. eine IEC Typ 2 Ladebuchse 230 des Fahrzeugs 200 mit einem entsprechenden Anschluss 150 der Vorrichtung 100. Das Ladekabel umhaust z.B. die erste Kommunikationsleitung 110 und eine erste Stromleitung 130, die zur Stromübertragung von der Batterie 210 an die Vorrichtung 100 dient und umgekehrt.

Ferner umfasst die Anordnung 400 eine stationäre Anlage 300, die z.B. in einem Haus verbaut sein kann (das Haus ist in Fig. 1 durch eine Strichlinie angedeutet).

Die stationäre Anlage 300 weist eine ebenfalls als Mikrokontroller ausgebildete, anlageninterne Steuereinrichtung 330 auf. Die anlageninterne Steuereinrichtung 330 dient unter anderem dazu, einen Gleichstromwandler 340 und einen Wechselstromwandler 350 der stationären Anlage 300 zu steuern. An die stationäre Anlage 300 ist eine als Photovoltaikanlage ausgebildete regenerative Energiequelle 310 und ein als Haushaltsgerät ausgebildeter Verbraucher 320 angeschlossen.

Die Anordnung 400 ist dazu ausgebildet, in einem Lademodus Strom für das Laden des Fahrzeugs 200 aus der regenerativen Energiequelle 310 bereitzustellen und in einem Entlademodus Strom für das Betreiben des Verbrauchers 320 aus der Batterie 210 des Fahrzeugs 200 bereitzustellen.

Möglich ist auch, dass die Anordnung 400 dazu ausgebildet ist, Strom aus dem Fahrzeug 200 in ein Stromnetz (nicht dargestellt) einzuspeisen. Die Anordnung 400, insbesondere die stationäre Anlage 300, kann hierzu an das Stromnetz angeschlossen sein (nicht dargestellt).

Die Vorrichtung 100 ist dazu ausgebildet, den zuvor erläuterten Parameter von dem Fahrzeug 200 an die stationäre Anlage 300 zu übertragen. Für das Übertragen des Parameters ist die Vorrichtung 100 über eine - z.B. als Busleitung ausgebildete - weitere Kommunikationsleitung 120 an einen Kommunikationsanschluss 360 der stationären Anlage 300 angeschlossen. Zudem ist die Vorrichtung 100 über eine weitere Stromleitung 140 an einen Stromanschluss 370 der stationären Anlage 300 angeschlossen, um Strom an die stationäre Anlage 300 übertragen zu können und umgekehrt.

Die Vorrichtung 100 umfasst mehrere Komponenten. Eine zentrale Komponente ist eine als Mikrocontroller ausgebildete Kommunikationseinrichtung 10. Die Kommunikationseinrichtung 10 dient zur Kommunikation zwischen dem Fahrzeug 200 und der stationären Anlage 300.

Die Vorrichtung 100 löst insbesondere das technische Problem, dass das Fahrzeug 200 gemäß eines ersten Protokolls kommuniziert und die stationäre Anlage 300 gemäß eines weiteren Protokolls kommuniziert. Da die Kommunikation gemäß des ersten Protokolls z.B. inkompatibel zu der Kommunikation gemäß des weiteren Protokolls ist, kann der Parameter nicht ohne Weiteres zwischen dem Fahrzeug 200 und der stationären Anlage 300 übertragen werden. Das erste Protokoll kann z.B. ein Kommunikationsprotokoll wie ISO 15118-20 sein. Nachrichten gemäß des ersten Protokolls können z.B. im JSON- oder XML-Format kodiert sein. Das weitere Protokoll kann ein Kommunikationsprotokoll wie z.B. Modbus sein. Nachrichten gemäß des weiteren Protokolls können z.B. in einem Telegrammformat kodiert sein. Der Parameter kann beispielsweise als ein Attribut in einem protokollspezifischen Element einer Nachricht gemäß des jeweiligen Protokolls übertragen werden.

Die Vorrichtung 100 löst das beschriebene technische Problem, indem die Kommunikationseinrichtung 10 den Parameter von dem ersten Protokoll in das weitere Protokoll übersetzt. Hierdurch kann die Batterie 210 des Fahrzeugs 200 z.B. als Pufferspeicher genutzt werden, obwohl die stationäre Anlage 300 eigentlich nur für die Nutzung mit einem stationären Energiespeicher (nicht dargestellt) ausgelegt ist, der z.B. das weitere Protokoll spricht. Dies erweitert den Einsatzbereich von Fahrzeugen mit bidirektionaler Ladefunktion.

Das Übersetzen des Parameters von dem ersten Protokoll in das weitere Protokoll kann z.B. mittels einer Zuordnungsvorschrift erfolgen. Die Zuordnungsvorschrift kann vorbekannt sein. Die Vorrichtung 100 kann z.B. dazu ausgebildet sein, den mindestens einen Parameter mittels der Kommunikationseinrichtung 10 aus einer Nachricht gemäß des ersten Protokolls auszulesen und in eine Nachricht gemäß des weiteren Protokolls zu schreiben. Beispielsweise kann der Parameter aus einem mittels der Zuordnungsvorschrift zugeordneten Element der Nachricht gemäß des ersten Protokolls ausgelesen werden und in ein mittels der Zuordnungsvorschrift zugeordnetes Element der Nachricht gemäß des weiteren Protokolls geschrieben werden. Hierdurch kann das Übersetzen des Parameters durch einen Lese- und einen Schreibvorgang realisiert werden.

Die Vorrichtung 100 ist ferner dazu ausgebildet, Strom zwischen dem Fahrzeug 200 und der stationären Anlage 300 wandlungsfrei - d.h. ohne Stromwandlung - zu übertragen. Hierdurch werden elektrische Verluste bei der Stromübertragung zwischen dem Fahrzeug 200 und der stationären Anlage 300 reduziert und es wird kein vorrichtungsinterner Stromwandler benötigt. Denn die stationäre Anlage 300 weist Stromwandler 340, 350 auf, die den übertragenen Strom entsprechend seinem Verwendungszweck wandeln. Der übertragene Strom ist Gleichstrom und kann mittels des Gleichstromwandlers 340 auf ein anderes Spannungsniveau gewandelt werden und/oder mittels des Wechselstromwandlers 350 in Wechselstrom gewandelt werden und umgekehrt.

Die Vorrichtung 100 umfasst ferner eine Schalteinrichtung 20. Die Schalteinrichtung 20 kann z.B. als ein Schütz ausgebildet sein und dient zum Herstellen einer Stromverbindung zwischen dem Fahrzeug 200 und der stationären Anlage 300. Die Vorrichtung 100 ist dazu ausgebildet, die Stromverbindung erst dann mittels der mindestens einen Schalteinrichtung 20 herzustellen, wenn ein Istwert um nicht mehr als eine vorbekannte Differenz von einem Sollwert abweicht. Der Sollwert kann z.B. ein Wert der Spannung sein, der durch die stationäre Anlage 300 bereitgestellt werden soll. Der übertragene Parameter kann z.B. den hier relevanten Sollwert umfassen. Der Sollwert kann daher in einer Nachricht gemäß des ersten Protokolls von dem Fahrzeug 200 an die Vorrichtung 100 kommuniziert werden. Der Istwert kann z.B. ein Wert der Spannung sein, der durch die stationäre Anlage 300 aktuell bereitgestellt wird. Der Istwert kann daher in einer Nachricht gemäß des weiteren Protokolls von der stationären Anlage 300 an die Vorrichtung 100 kommuniziert werden. Hierdurch kann sichergestellt werden, dass ein Spannungsniveau zwischen dem Fahrzeug 200 und der stationären Anlage 300 angeglichen ist, bevor eine elektrische Verbindung zwischen dem Fahrzeug 200 und der stationären Anlage 300 hergestellt wird, um z.B. elektrische Durchschläge zu vermeiden.

Die Kommunikationseinrichtung 10 kann dazu ausgebildet sein, eine Abweichung zwischen dem Istwert und dem Sollwert zu bestimmen. Die Schalteinrichtung 20 kann insbesondere durch die Kommunikationseinrichtung 10 gesteuert werden (Dies ist in Fig. 1 durch eine Strichlinie zwischen der Kommunikationseinrichtung 10 und der Schalteinrichtung 20 dargestellt).

Die Vorrichtung 100 umfasst ferner eine als Voltmeter ausgebildete Sensoreinrichtung 30. Denn die Vorrichtung 100 ist dazu ausgebildet, einen weiteren Istwert mittels der Sensoreinrichtung 30 zu erfassen, der zum Abgleich mit dem kommunizierten Istwert genutzt werden kann. Der weitere Istwert kann z.B. ein an der weiteren Stromleitung 140 anliegender Spannungswert sein. Die Stromverbindung kann z.B. erst dann mittels der Schalteinrichtung 20 hergestellt werden, wenn der mindestens eine weitere Istwert um nicht mehr als eine vorbekannte Differenz von dem zuvor erläuterten Sollwert abweicht. Auf diese Weise kann vorrichtungsintern sichergestellt werden, dass z.B. der Spannungswert, der über die weitere Stromleitung 140 bereitgestellt wird, dem vorgegebenen Sollwert ausreichend nahe ist, ohne auf den mittels der stationären Anlage 300 kommunizierten Istwert vertrauen zu müssen.

Die Vorrichtung 100 ist ferner dazu ausgebildet, ein Aufwecksignal von der stationären Anlage 300 an das Fahrzeug 200 zu übertragen, z.B. über die Kommunikationsleitungen 110, 120 und mit Hilfe der Kommunikationseinrichtung 10. Auf diese Weise kann das Fahrzeug 200 aus einem Stand-By-Modus geweckt werden, um das bidirektionale Laden zu initialisieren.

Eine Spannungsversorgung der Vorrichtung 100 kann netzseitig, z.B. durch einen Anschluss (nicht dargestellt) an das Stromnetz und/oder anlagenseitig, z.B. über den Stromanschluss 370 erfolgen. Die Spannungsversorgung der Vorrichtung 100 kann aber auch fahrzeugseitig, z.B. über einen 12 Volt Anschluss (nicht dargestellt) des Fahrzeugs 200 erfolgen. Der 12 Volt Anschluss kann z.B. mit einer Starterbatterie (nicht dargestellt) des Fahrzeugs 200 verbunden sein. Hierdurch kann das Fahrzeug 200 bei einem netzseitigen Stromausfall zum Betreiben der Vorrichtung 100 genutzt werden, um z.B. den zuvor erläuterten Verbraucher 320 mit Strom aus der Batterie 210 zu versorgen.

Ferner umfasst die Vorrichtung 100 eine als z.B. Lithium-Ionen-Speicher oder Superkondensator ausgebildete Energiespeichereinrichtung 40. Die Spannungsversorgung der Vorrichtung 100 kann auch mittels der Energiespeichereinrichtung 40 erfolgen, z.B. indem die Energiespeichereinrichtung 40 eine Spannung zum Betrieb der Kommunikationseinrichtung 10, der Schalteinrichtung 20 und/oder der Sensoreinrichtung 30 bereitstellt (In Fig. 1 ist die Spannungsversorgung durch eine gestrichelte Linie zwischen der Energiespeichereinrichtung 40 und der Kommunikationseinrichtung 10 dargestellt). Auf diese Weise ist die Vorrichtung 100 autark.

Der übertragene Parameter kann alternativ oder kumulativ einen der folgenden Werte aufweisen:
- ein aktueller, maximaler und/oder minimaler Ladestromwert,
- ein aktueller, maximaler und/oder minimaler Ladespannungswert und/oder
- ein aktueller, maximaler und/oder minimaler Ladeleistungswert.

Der jeweilige aktuelle Wert kann z.B. ein Istwert der Batterie 210 oder der zuvor erläuterte Istwert der stationären Anlage 300 sein. Der jeweilige minimale und/oder maximale Wert kann z.B. eine Betriebsgrenze der Batterie 210 oder der stationären Anlage 300 sein. Die Vorrichtung 100 kann dazu ausgebildet sein, eine Stromverbindung zu trennen, wenn der jeweilige aktuelle Wert den zugehörigen minimalen und/oder maximalen Wert unter- bzw. überschreitet. Auf diese Weise kann sichergestellt werden, dass z.B. der aktuelle Ladestrom, die aktuelle Ladespannung und/oder die aktuelle Ladeleistung innerhalb eines vorgegeben Betriebsbereichs liegen.

### Bezugszeichenliste

- 10: Kommunikationseinrichtung
- 20: Schalteinrichtung
- 30: Sensoreinrichtung
- 40: Energiespeichereinrichtung
- 100: Vorrichtung
- 110: erste Kommunikationsleitung
- 120: weitere Kommunikationsleitung
- 130: erste Stromleitung
- 140: weitere Stromleitung
- 150: Anschluss
- 200: Fahrzeug
- 210: Batterie
- 220: fahrzeuginterne Steuereinrichtung
- 230: Ladebuchse
- 300: stationäre Anlage
- 310: regenerative Energiequelle
- 320: Verbraucher
- 330: anlageninterne Steuereinrichtung
- 340: Gleichstromwandler
- 350: Wechselstromwandler
- 360: Kommunikationsanschluss
- 370: Stromanschluss
- 400: Anordnung

## Patentansprüche

1. Vorrichtung (100) für das bidirektionale Laden, umfassend:
- mindestens eine Kommunikationseinrichtung (10) zur Kommunikation zwischen mindestens einem Fahrzeug (200) und mindestens einer stationären Anlage (300), wobei das mindestens eine Fahrzeug (200) gemäß eines ersten Protokolls kommuniziert und die mindestens eine stationäre Anlage (300) gemäß eines weiteren Protokolls kommuniziert,
wobei die Vorrichtung (100) dazu ausgebildet ist, mindestens einen Parameter von dem mindestens einen Fahrzeug (200) an die mindestens eine stationäre Anlage (300) zu übertragen, indem die mindestens eine Kommunikationseinrichtung (10) den mindestens einen Parameter von dem ersten Protokoll in das weitere Protokoll übersetzt, wobei der mindestens eine Parameter das bidirektionale Laden parametrisiert.

2. Vorrichtung (100) nach Anspruch 1, **dadurch gekennzeichnet, dass** die Vorrichtung (100) dazu ausgebildet ist, den Strom zwischen dem mindestens einen Fahrzeug (200) und der mindestens einen stationären Anlage (300) wandlungsfrei zu übertragen.

3. Vorrichtung (100) nach einem der vorangegangenen Ansprüche, **dadurch gekennzeichnet, dass** die Vorrichtung (100) dazu ausgebildet ist, den mindestens einen Parameter mittels der mindestens einen Kommunikationseinrichtung (10) aus einer Nachricht gemäß des ersten Protokolls auszulesen und in eine Nachricht gemäß des weiteren Protokolls zu schreiben.

4. Vorrichtung (100) nach einem der vorangegangenen Ansprüche, **dadurch gekennzeichnet, dass** die Vorrichtung (100) mindestens eine Schalteinrichtung (20) zum Herstellen einer Stromverbindung zwischen dem mindestens einen Fahrzeug (200) und der mindestens einen stationären Anlage (300) umfasst, wobei die Vorrichtung (100) dazu ausgebildet ist, dass die Stromverbindung erst dann mittels der mindestens einen Schalteinrichtung (20) hergestellt wird, wenn mindestens ein Istwert um nicht mehr als eine vorbekannte Differenz von mindestens einem Sollwert abweicht, wobei der mindestens eine Sollwert über das erste Protokoll kommuniziert wird und der mindestens eine Istwert über das weitere Protokoll kommuniziert wird.

5. Vorrichtung (100) nach einem der vorangegangenen Ansprüche, **dadurch gekennzeichnet, dass** die Vorrichtung (100) ferner mindestens eine Sensoreinrichtung (30) umfasst, wobei die mindestens eine Vorrichtung (100) dazu ausgebildet ist, dass mindestens ein Istwert mittels der mindestens einen Sensoreinrichtung (30) erfasst wird, wobei eine Stromverbindung zwischen dem mindestens einen Fahrzeug (200) und der mindestens einen stationären Anlage (300) erst dann mittels mindestens einer Schalteinrichtung (20) hergestellt wird, wenn der erfasste mindestens eine Istwert um nicht mehr als eine vorbekannte Differenz von mindestens einem Sollwert abweicht.

6. Vorrichtung (100) nach einem der vorangegangenen Ansprüche, **dadurch gekennzeichnet, dass** die Vorrichtung (100) dazu ausgebildet ist, mindestens ein Aufwecksignal von der mindestens einen stationären Anlage (300) an das mindestens eine Fahrzeug (200) zu übertragen.

7. Vorrichtung (100) nach einem der vorangegangenen Ansprüche, **dadurch gekennzeichnet, dass** mindestens eine Spannungsversorgung der Vorrichtung (100) fahrzeugseitig erfolgt.

8. Vorrichtung (100) nach einem der vorangegangenen Ansprüche, **dadurch gekennzeichnet, dass** die Vorrichtung (100) mindestens eine Energiespeichereinrichtung (40) umfasst, wobei eine Spannungsversorgung der Vorrichtung (100) mittels der mindestens einen Energiespeichereinrichtung (40) erfolgt.

9. Vorrichtung (100) nach einem der vorangegangenen Ansprüche, **dadurch gekennzeichnet, dass** mindestens ein übertragener Parameter mindestens einen der folgenden Werte aufweist:
- ein aktueller, maximaler und/oder minimaler Ladestromwert,
- ein aktueller, maximaler und/oder minimaler Ladespannungswert und/oder
- ein aktueller, maximaler und/oder minimaler Ladeleistungswert.

10. Anordnung (400) für das bidirektionale Laden, umfassend:
- mindestens eine Vorrichtung (100) nach einem der vorangegangenen Ansprüche,
- mindestens ein Fahrzeug (200),
- mindestens eine stationäre Anlage (300), wobei die mindestens eine stationäre Anlage (300) an mindestens eine regenerative Energiequelle (310) und/oder mindestens einen Verbraucher (320) angeschlossen ist,
wobei die Anordnung (400) dazu ausgebildet ist, dass Strom für das Laden des mindestens einen Fahrzeugs (200) aus der mindestens einen regenerativen Energiequelle (310) bereitgestellt wird und/oder Strom für das Betreiben des mindestens einen Verbrauchers (320) aus dem mindestens einen Fahrzeug (200) bereitgestellt wird.
